# EUROPÄISCHE PATENTSCHRIFT

(11) **EP 2 796 004 B1**
(45) Veröffentlichungstag und Bekanntmachung des Hinweises auf die Patenterteilung: **15.05.2019**
(21) Anmeldenummer: 12815675.9
(22) Anmeldetag: 20.12.2012
(51) Int. Cl.: H05B 33/08

(54) **VERFAHREN UND SCHALTUNGSANORDNUNG ZUM BETRIEB VON LEUCHTMITTELN MIT LASTSPRUNG**
METHOD AND CIRCUIT ARRANGEMENT FOR OPERATING LIGHT-EMITTING MEANS WITH A SUDDEN LOAD VARIATION
PROCÉDÉ ET CIRCUIT PERMETTANT DE FAIRE FONCTIONNER DES MOYENS D'ÉCLAIRAGE À VARIATION BRUSQUE DE CHARGE

(30) Priorität: 23.12.2011 DE 102011089815; 18.04.2012 DE 102012206349
(43) Veröffentlichungstag der Anmeldung: 29.10.2014
(73) Patentinhaber: Tridonic GmbH & Co. KG, 6851 Dornbirn (AT)
(72) Erfinder: MITTERBACHER, Andre, A-6850 Dornbirn (AT)
(74) Vertreter: Rupp, Christian
(86) Internationale Anmeldenummer: PCT/EP2012/076363
(87) Internationale Veröffentlichungsnummer: WO 2013/092847

(56) Entgegenhaltungen:
- EP-A2- 2 043 242
- WO-A1-2011/109210
- DE-A1-102008 057 333
- US-A1- 2002 175 747
- US-A1- 2007 236 200

## Beschreibung

Die Erfindung betrifft ein Verfahren und eine Schaltungsanordnung zum Betreiben von Leuchtmitteln, insbesondere einer Last, welche schnelle Leistungssprünge durchführen.

Zum Betreiben von LED-Leuchten werden üblicherweise leistungsfaktorkorrigierte Netzteile eingesetzt. Da eine LED-Strecke, insbesondere eine dimmbare LED-Strecke, keine konstante Last darstellt, werden diese Netzteile üblicherweise geregelt. Hierzu wird häufig eine Überwachung der Ausgangsspannung des Netzteils durchgeführt. Diese Ausgangsspannung wird als Regelgröße genutzt. Um einen günstigen Leistungsfaktor und eine geringe Rückwirkung ins Stromnetz zu erreichen, weist diese Regelung üblicherweise eine sehr hohe Zeitkonstante auf. So arbeitet der Regler üblicherweise z.B. bei <20Hz. Eine Regelung, welche Änderungen des Leistungsfaktors während einer gesamten Schwingung der Netzspannung durchführt, würde zu einem ungünstigeren Leistungsfaktor und damit zu einer größeren Rückwirkung ins Stromnetz führen.

Insbesondere bei schnellen Lastwechseln, z. B. bei einem plötzlichen Anschalten, Ausschalten oder Dimmen einer LED-Strecke kann die herkömmliche langsame Regelung nicht folgen. Dies führt zu einer deutlichen Schwankung der Ausgangsspannung des Netzteils.

So zeigt die WO 2011/045372 A1 eine Betriebsschaltung zum Betrieb von LED-Modulen. Aus einer Wechselspannung wird dort mittels Leistungsfaktorkorrektur eine Gleichspannung erzeugt. Insbesondere bei schnellen Lastwechseln ergibt sich jedoch eine Schwankung der Ausgangsspannung.

Das Patentdokument DE 10 2008 057333 A1 offenbart eine Betriebsschaltung für eine LED-Strecke, mit einer aktiv getakteten Leistungsfaktor-Korrekturschaltung, die eine mit einer Regelschleife geregelte Ausgangsspannung erzeugt.

Die Regelschleife weist eine Steuereinheit auf, die als Stellgrösse die Taktung eines Schalters der Leistungsfaktor-Korrekturschaltung ansteuert. Bei sehr niedriger Last wird die Zeitkonstante der Regelschleife der Ausgangsspannung verändert, so dass die Regelung verlangsamt wird.

Der gegenwärtigen Erfindung liegt die Aufgabe zu Grunde, ein Verfahren und eine Schaltungsanordnung zu schaffen, welche einen sicheren und störungsfreien Betrieb einer schnell veränderlichen Last sicherstellen.

Eine erfindungsgemäße Betriebsschaltung für Leuchtmittel in Form einer LED-Strecke, beinhaltet eine aktiv getakteten Leistungsfaktor-Korrekturschaltung, die eine mit einer Regelschleife geregelte Ausgangsspannung erzeugt, mittels der unmittelbar oder mittelbar über wenigstens eine weitere Konverterstufe die Leuchtmittel versorgt werden. Die Regelung erfolgt mittels einer Steuereinheit, die als Stellgrösse die Taktung eines Schalters der Leistungsfaktor-Korrekturschaltung ansteuert. Die Betriebsschaltung ist dazu ausgelegt, bei Vorliegen einer schnellen bzw. sprunghaften Veränderung des Energiebedarfs der Leuchtmittel die Zeitkonstante der Regelschleife der Ausgangsspannung zu verringern.

Bevorzugt beinhaltet die Steuereinheit einen Subtrahierer, welcher eine Differenz einer gegenwärtig von dem Leuchtmittel aufgenommenen Leistung und einer nach einer Leistungsänderung von dem Leuchtmittel aufgenommenen Leistung bildet. Die Steuereinheit detektiert bevorzugt in Abhängigkeit von der Differenz das vordefinierte Event. So kann sehr einfach und flexibel ermittelt werden, wann ein Eingriff in die herkömmliche Regelung notwendig ist.

Vorteilhafterweise beinhaltet die Steuereinheit einen Vergleicher, welcher die zuvor ermittelte Differenz mit zumindest einem Schwellwert vergleicht, und in Abhängigkeit von dem Vergleich das vordefinierte Event detektiert. So kann noch einfacher ermittelt werden, wann ein Eingriff in die herkömmliche Regelung notwendig ist.

Die Betriebsschaltung ist vorzugsweise dazu ausgelegt, um bei einem Vorliegen einer schnellen bzw. sprunghaften Erhöhung des Energiebedarfs der Leuchtmittel, mit einer Vorwärtssteuerung den Wert der Stellgrösse sprunghaft zu erhöhen, und um bei einem Vorliegen einer schnellen bzw. sprunghaften Verringerung des Energiebedarfs der Leuchtmittel, mit einer Vorwärtssteuerung den Wert der Stellgrösse sprunghaft zu verringern. So kann ein Lastsprung sicher kompensiert werden.

Die Betriebsschaltung ist alternativ dazu ausgelegt, um bei einem Vorliegen einer schnellen bzw. sprunghaften Erhöhung des Energiebedarfs der Leuchtmittel, die Zeitkonstante der Regelschleife der Ausgangsspannung zu verringern, und um bei einem Vorliegen einer schnellen bzw. sprunghaften Verringerung des Energiebedarfs der Leuchtmittel, die Zeitkonstante der Regelschleife der Ausgangsspannung zu verringern. So kann ein Lastsprung ebenfalls sicher kompensiert werden.

Die Steuereinheit ist weiterhin bevorzugt ausgebildet, um bei Vorliegen des vordefinierten Events, den Wert der Stellgrösse bzw. die Zeitkonstante der Regelschleife durch eine Berechnungsvorschrift oder ein Auslesen einer Tabelle zu ermitteln. So kann mit geringem Speicherbedarf oder mit geringer Rechenlast der Eingriff in die Regelung bestimmt werden.

Ein erfindungsgemäßes Verfahren dient dem Betrieb von Leuchtmitteln, insbesondere LED-Strecken. Mittels aktiv getakteter Leistungsfaktor-Korrektur wird eine geregelte Ausgangsspannung erzeugt. Mittels dieser werden unmittelbar oder mittelbar die Leuchtmittel versorgt. Die Regelung nutzt als Stellgrösse die Taktung der Leistungsfaktor-Korrektur. Bei Vorliegen einer schnellen bzw. sprunghaften Veränderung des Energiebedarfs der Leuchtmittel wird die Zeitkonstante der Regelschleife der Ausgangsspannung verringert. So ist es möglich die Betriebsspannung konstant zu halten und so einen sicheren Betrieb zu gewährleisten.

Nachfolgend wird die Erfindung anhand der Zeichnung, in der ein vorteilhaftes Ausführungsbeispiel der Erfindung dargestellt ist, beispielhaft beschrieben. In der Zeichnung zeigt:
- Fig. 1: ein erstes Ausführungsbeispiel der erfindungsgemäßen Schaltungsanordnung;
- Fig. 2: ein erstes Ausführungsbeispiel des erfindungsgemäßen Verfahrens, und
- Fig. 3: ein zweites Ausführungsbeispiel des erfindungsgemäßen Verfahrens.

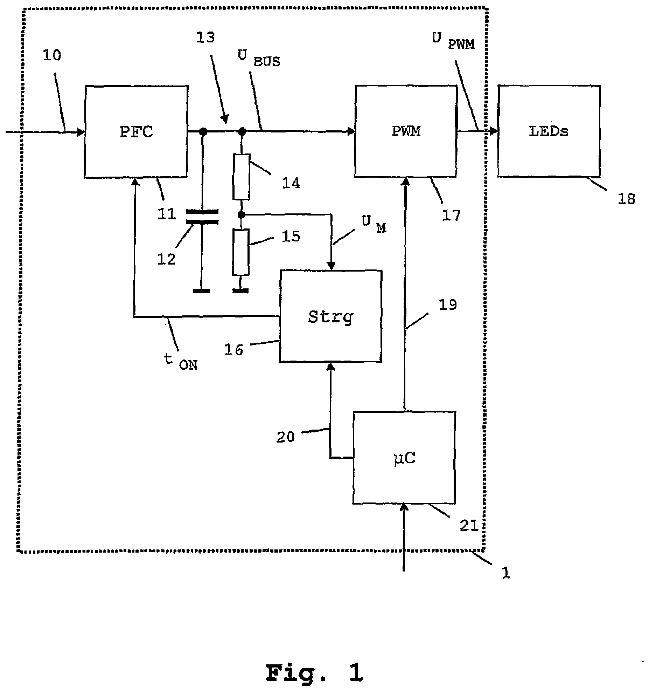

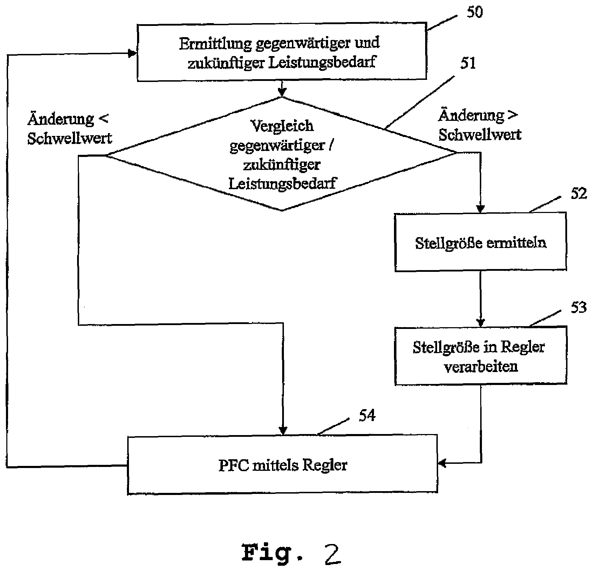

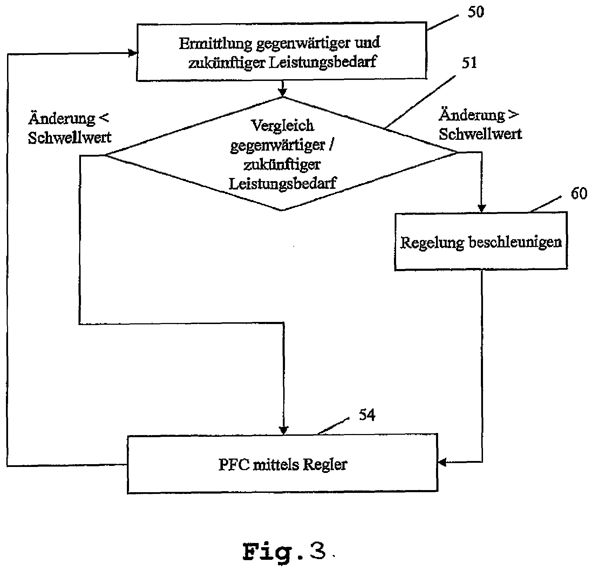

Zunächst wird anhand der Fig. 1 auf den generellen Aufbau und die allgemeine Funktionsweise der erfindungsgemäßen Schaltungsanordnung anhand eines Ausführungsbeispiels eingegangen. Mittels Fig. 2 wird anschließend die detaillierte Funktion eines Reglers innerhalb eines weiteren Ausführungsbeispiels der gegenwärtigen Erfindung veranschaulicht. Abschließend wird anhand von Fig. 3 und Fig. 4 die Funktionsweise von Ausführungsbeispielen des erfindungsgemäßen Verfahrens veranschaulicht. Ähnliche Merkmale wurden in ähnlichen Abbildungen nicht wiederholt dargestellt und beschrieben.

In Fig. 1 ist ein erstes Ausführungsbeispiel der erfindungsgemäßen Schaltungsanordnung gezeigt. Eine Betriebsschaltung 1 beinhaltet eine Leistungsfaktor-Korrekturschaltung 11, welche mit einem Netzanschluss 10 verbunden ist. Mit einem Ausgang der Leistungsfaktor-Korrekturschaltung 11 ist ein Glättungskondensator 12 verbunden. Der Ausgang der Leistungsfaktor-Korrekturschaltung 11 ist weiterhin mit einem Spannungsteiler 13 verbunden. Der Spannungsteiler 13 besteht dabei aus ohmschen Widerständen 14 und 15. Der ohmsche Widerstand 14 ist dabei mit dem Ausgang der Leistungsfaktor-Korrekturschaltung 11 und dem ohmschen Widerstand 15 verbunden. Der Ohm'sche Widerstand 15 ist an seinem abgewandten Ende weiterhin mit Masse verbunden. Der Ausgang der Leistungsfaktor-Korrekturschaltung 11 ist weiterhin mit einem Pulsweitenmodulator 17 verbunden. Ein Ausgang des Pulsweitenmodulators 17 ist mit einem LED-Modul 18 verbunden.

Der Mittelpunkt des Spannungsteilers 13 ist darüber hinaus mit einer Steuereinheit 16 verbunden. Die Steuereinheit 16 wiederum ist mit der Leistungsfaktor-Korrekturschaltung 11 verbunden. Darüber hinaus beinhaltet die Betriebsschaltung 1 einen Mikrocontroller 21. Der Mikrocontroller 21 ist mit der Steuereinheit 16 und dem Pulsweitenmodulator 17 verbunden. Optional ist der Mikrocontroller 21 zusätzlich mit der Leistungsfaktor-Korrekturschaltung 11 verbunden.

Die Leistungsfaktor-Korrekturschaltung 11 führt eine aktiv getaktete Leistungsfaktor-Korrektur des Netzsignals, welches am Netzanschluss 10 anliegt, durch. D. h. die Leistungsfaktor-Korrekturschaltung 11 wählt einzelne Abschnitte jeder Schwingung des Netzsignals aus und gibt diese an seinem Ausgang aus. Der Glättungskondensator 12, welcher zusätzlich mit Masse verbunden ist, glättet das von der Leistungsfaktor-Korrekturschaltung 11 ausgegebene Signal. Es ergibt sich somit eine Gleichspannung U_{BUS}. Die Gleichspannung U_{BUS} wird dem Pulsweitenmodulator 17 zugeführt. Dieser führt eine Pulsweitenmodulation der Gleichspannung U_{BUS} durch und erzeugt so eine pulsweitenmodulierte Gleichspannung U_{PWM}. Das Ausgangssignal U_{PWM} des Pulsweitenmodulators 17 wird an das LED-Modul 18 ausgegeben. Für die gegenwärtige Erfindung sind der Pulsweitenmodulator und das LED-Modul nicht entscheidend. Auch eine von dem LED-Modul abweichende Last kann eingesetzt werden. Eine Pulsweitenmodulation ist nicht zwingend notwendig. Alternativ kann auch eine Amplitudenmodulation oder auch eine andere Form der Pulsmodulation erfolgen. Vorzugsweise ist der Pulsweitenmodulator 17 als hochfrequent getakteter Schaltregler ausgebildet. Es kann sich hierbei um einen einstufigen oder mehrstufigen Konverter handeln, beispielsweise um einen Flyback-Konverter (isolierter Sperrwandler), Buck-Konverter (Tiefsetzsteller), resonanten Halbbrückenwandler (vorzugsweise mit Potentialtrennung) oder um eine Reihenschaltung derartiger oder ähnlicher Konvertertopologien. Das Gleichspannungssignal U_{BUS} kann auch direkt zum Betrieb der Last eingesetzt werden, wobei dann bspw. ein Linearregler zum Anpassen oder ein Schalter zum Unterbrechen des LED Stromes vorhanden sein kann.

Der Spannungsteiler 13 teilt die Ausgangsspannung U_{BUS} der Leistungsfaktor-Korrekturschaltung 11 im Verhältnis der ohmschen Widerstände 14 und 15. Das resultierende Signal U_{M} wird der Steuereinheit 16 als Regelgröße zugeführt. In Abhängigkeit der Regelgröße U_{M} erzeugt die Steuereinheit eine Stellgröße t_{ON} und überträgt diese an die Leistungsfaktor-Korrekturschaltung 11. Die Steuereinheit 16 regelt somit die Ausgangsspannung U_{BUS}. Um einen möglichst guten Leistungsfaktor zu erzielen, arbeitet die Reglung 16 dabei mit einer Frequenz welche deutlich kleiner ist als die Netzfrequenz am Netzanschluss 10. Bevorzugt arbeitet die Regelung mit einer Frequenz <50Hz, besonders bevorzugt <20Hz.

Der Mikrocontroller 21 empfängt Signale, welche eine Änderung der gegenwärtig von der LED-Strecke 18 verbrauchten Leistung initiieren und sendet ein entsprechendes Dimmsignal 19 an den Pulsweitenmodulator 17. Statt einem Pulsweitenmodulator 17 und einem LED-Modul 18 kann auch ein abweichendes einstellbares Leuchtmittel eingesetzt werden. Wichtig ist lediglich, dass der Mikrocontroller 21 die gegenwärtig verbrauchte Leistung einstellt. Der Mikrocontroller 21 verarbeitet dabei z.B. Signale nach dem DALI-Standard. Auch ist ein Anschluss mehrerer unabhängiger Lasten an die Leistungsfaktor-Korrekturschaltung denkbar. Der Mikrocontroller 21 steuert dann zumindest eine, bevorzugterweise den überwiegenden Teil, besonders bevorzugterweise alle angeschlossenen Lasten.

Der Mikrocontroller 21 teilt zusätzlich den anstehenden Lastsprung über ein Steuersignal 20 der Steuereinheit 16 mit. Bevorzugt beinhaltet das Steuersignal 20 die Höhe und Richtung des anstehenden Lastsprungs. Alternativ teilt er stets den aktuellen Leistungsbedarf mit. Sobald der Mikrocontroller 21 der Steuereinheit 16 einen solchen Lastsprung ankündigt, wird die Regelung beeinflusst. Dies kann auf zwei unterschiedliche Weisen erfolgen.

Eine erste Option ist die Beschleunigung der Regelung. In diesem Fall verringert die Steuereinheit 16 die Zeitkonstante der Regelung, um das Stellsignal t_{ON} an den veränderten Leistungsbedarf der LED-Strecke 18 anzupassen. Ansonsten bleibt die Regelung durch den Regler 16 unverändert. Durch die Beschleunigung der Regelung wird jedoch kurzzeitig ein ungünstiger Leistungsfaktor verursacht und in Kauf genommen. Der ungünstige Leistungsfaktor besteht solange die Regelung beschleunigt abläuft. Die Regelung arbeitet dann bei >20Hz, bevorzugt bei >50Hz, besonders bevorzugt bei >200Hz.

Eine zweite Möglichkeit ist die kurzzeitige Überbrückung der herkömmlichen Regelung. In diesem Fall findet eine Vorwärtssteuerung der Regelung durch die Steuereinheit 16 statt. Auf die detaillierte Ausgestaltung dieser Option wird anhand von Fig. 2 näher eingegangen.

Auch bei dieser zweiten Option wird kurzfristig ein ungünstiger Leistungsfaktor in Kauf genommen, um die Ausgangsspannung der Leistungsfaktor-Korrekturschaltung stabil zu halten. Der Leistungsfaktor ist in diesem zweiten Fall für einen deutlich kürzeren Zeitpunkt in einem ungünstigen Bereich als dies bei der ersten Option der Fall ist. Während dieses sehr kurzen Zeitraums ist der Leistungsfaktor jedoch deutlich ungünstiger als bei der ersten Option.

Wie bereits erläutert, kann der Regel-Betrieb jedoch bei schnellen Lastwechseln überfordert sein. Die Steuereinheit 16 ermittelt somit basierend auf den von dem Mikrocontroller 21 übermittelten Informationen bzgl. des Leistungsbedarfs ein Vorwärtskoppel-Auswahlsignal und überträgt es an eine Auswahleinrichtung. Es dient der Auswahl zwischen dem soeben dargestellten herkömmlichen Regel-Betrieb und einer Vorwärtskopplung. Zusätzlich ermittelt die Steuereinheit 16 ein Vorwärtskoppelsignal und führt es der Auswahleinrichtung zu. Das Vorwärtskoppelsignal entspricht einer Stellgröße, mit welcher die Regelung beaufschlagt wird. Sofern das Vorwärtskoppel-Auswahlsignal einen Vorwärtskoppel-Betrieb anzeigt, führt die Auswahleinrichtung das VorwärtskoppelSignal über das Verzögerungsglied zurück. Die Steuereinheit 16 koppelt somit nicht länger sein eigenes Ausgangssignal zurück. Der hier dargestellte Betrieb entspricht der zweiten Option, welche bereits anhand von Fig. 1 dargestellt wurde.

Das Vorwärtskoppelsignal wird dabei entweder durch eine Berechnungsvorschrift berechnet oder aus einer gespeicherten Tabelle ausgelesen. Das Vorwärtskoppelsignal ist dabei von der Größe des Lastsprungs und von seiner Richtung abhängig.

Insbesondere wenn Lastsprünge durch eine Pulsweitenmodulation ausgeglichen werden sollen, kann ein konstanter Wert für die Vorwärtskopplung eingesetzt werden. Die Lastsprünge bei einer Pulsweitenmodulation erfolgen stets über die gleiche Höhe.

In Fig. 3 ist ein erstes Ausführungsbeispiel des erfindungsgemäßen Verfahrens zum Betrieb einer Last dargestellt. In einem ersten Schritt 50 werden ein gegenwärtiger Leistungsbedarf und ein zukünftiger Leistungsbedarf ermittelt. Dies erfolgt bei der erfindungsgemäßen Schaltungsanordnung durch die Steuereinheit 16. Durch den Mikrocontroller 21 wird dabei lediglich der jeweilige Leistungsbedarf übermittelt.

In einem zweiten Schritt 51 werden der gegenwärtige Leistungsbedarf und der zukünftige Leistungsbedarf miteinander verglichen. Ist der Differenzbetrag größer als ein Schwellwert, so wird dies als ein Lastsprung detektiert. In diesem Fall wird mit einem dritten Schritt 52 fortgefahren. Eine geeignete Stellgröße zur Kompensation des Lastsprungs wird in diesem Schritt ermittelt. Dies kann wie bereits dargestellt durch eine Berechnungsvorschrift oder durch Auslesen einer Tabelle erfolgen. Dieser Schritt erfolgt bei der Schaltungsanordnung durch die Steuereinheit 16.

In einem vierten Schritt 53 wird die soeben ermittelte Stellgröße in der Reglung verarbeitet. D.h. die Vorwärtsregelung ersetzt den herkömmlich durch die Regelung ermittelten Stellwert. In einem fünften Schritt 54 wird die Leistungsfaktor-Korrekturschaltung geregelt. Dabei wird die Stellgröße aus dem vierten Schritt 53 genutzt.

Ist im zweiten Schritt 51 der Differenzbetrag kleiner als der Schwellwert, so wird kein Lastsprung detektiert. In diesem Fall wird direkt mit dem fünften Schritt 54 fortgefahren. Nach dem fünften Schritt 54 wird erneut mit dem ersten Schritt 50 begonnen. Das hier dargestellte Verfahren wird beliebig häufig wiederholt.

In Fig. 4 ist ein zweites Ausführungsbeispiel des erfindungsgemäßen Verfahrens dargestellt. Es entspricht weitgehend dem in Fig. 3 dargestellten Verfahren. Ist im zweiten Schritt 51 der Differenzbetrag jedoch größer als der Schwellwert, wird in einem dritten Schritt 60 lediglich die Regelung beschleunigt. D.h. die Zeitkonstante der Regelung wird deutlich verringert. Nach diesem Schritt 60 wird mit dem fünften Schritt 54 fortgefahren.

Alternativ kann statt des harten Vergleichs auch in Abhängigkeit der Differenz unterschiedlich verfahren werden. So ist z.B. der Einsatz zweier Schwellwerte denkbar. Unterhalb eines ersten Schwellwerts arbeitet der Regler ohne Eingriff. Zwischen den beiden Schwellwerten wird die Regelung beschleunigt. Dies entspricht der in Fig. 4 dargestellten Option. Oberhalb des oberen Schwellwerts wird eine Vorwärtsregelung durchgeführt, wie in Fig. 3 dargestellt.

Die Erfindung ist nicht auf das dargestellte Ausführungsbeispiel beschränkt. Wie bereits erwähnt, können unterschiedlichste Lasten oder auch mehrere Lasten eingesetzt werden. Auch ist ein Einsatz eines Netzteils, welches von einer Leistungsfaktor-Korrekturschaltung abweicht denkbar. Alle vorstehend beschriebenen Merkmale oder in den Figuren gezeigten Merkmale sind im Rahmen der Erfindung, wie in den Ansprüchen definiert, beliebig vorteilhaft miteinander kombinierbar.

## Patentansprüche

1. Betriebsschaltung für Leuchtmittel (18) in Form einer LED-Strecke,
mit einer aktiv getakteten Leistungsfaktor-Korrekturschaltung (11), die eine mit einer Regelschleife geregelte Ausgangsspannung (U_{BUS}) erzeugt, mittels der unmittelbar oder mittelbar über wenigstens eine weitere Konverterstufe (17) die Leuchtmittel (18) versorgt werden, wobei die Regelschleife eine Steuereinheit (16) aufweist, die als Stellgrösse (t_{ON}) die Taktung eines Schalters der Leistungsfaktor-Korrekturschaltung (11) ansteuert,
**dadurch gekennzeichnet,**
**dass** die Betriebsschaltung dazu ausgelegt ist, bei Vorliegen einer schnellen bzw. sprunghaften Veränderung des Energiebedarfs der Leuchtmittel (18) die Zeitkonstante der Regelschleife der Ausgangsspannung (U_{BUS}) zu verringern.

2. Betriebsschaltung nach Anspruch 1,
**dadurch gekennzeichnet,**
**dass** die Betriebsschaltung dazu ausgelegt ist, bei der schnellen bzw. sprunghaften Veränderung des Energiebedarfs der Leuchtmittel (18) den Wert der Stellgrösse (t_{ON}) mit einer Vorwärtssteuerung sprunghaft zu verändern.

3. Betriebsschaltung nach der Anspruch 1 oder 2,
**dadurch gekennzeichnet,**
**dass** die Steuereinheit (16) einen Subtrahierer beinhaltet, dass der Subtrahierer eine Differenz einer gegenwärtig von dem Leuchtmittel (18) aufgenommenen Leistung und einer nach einer Leistungsänderung von dem Leuchtmittel (18) aufgenommenen Leistung bildet, und
**dass** die Steuereinheit (16) in Abhängigkeit von der Differenz das vordefinierte Event detektiert.

4. Betriebsschaltung nach Anspruch 3,
**dadurch gekennzeichnet,**
**dass** die Steuereinheit (16) einen Vergleicher beinhaltet, dass der Vergleicher die Differenz mit
zumindest einem Schwellenwert vergleicht, und
**dass** die Steuereinheit (16) in Abhängigkeit von dem Vergleich das vordefinierte Event detektiert.

5. Betriebsschaltung nach Anspruch 2 und 4,
**dadurch gekennzeichnet,**
**dass** der Vergleicher dazu ausgelegt ist, die Differenz mit zwei Schwellenwerten zu vergleichen, und
die Betriebsschaltung dazu ausgelegt ist, die Zeitkonstante der Regelschleife der Ausgangsspannung (U_{BUS}) zu verringern, wenn die Differenz zwischen den beiden Schwellenwerten liegt, und den Wert der Stellgrösse (t_{ON}) mit einer Vorwärtssteuerung sprunghaft zu verändern, wenn die Differenz oberhalb des oberen Schwellenwerts der beiden Schwellenwerte liegt.

6. Betriebsschaltung nach einem der Ansprüche 1 bis 5,
**dadurch gekennzeichnet,**
**dass** die Betriebsschaltung dazu ausgelegt ist,
um bei einem Vorliegen einer schnellen bzw. sprunghaften Erhöhung des Energiebedarfs der Leuchtmittel (18), mit einer Vorwärtssteuerung den Wert der Stellgrösse (t_{ON}) sprunghaft zu erhöhen, und
um bei einem Vorliegen einer schnellen bzw. sprunghaften Verringerung des Energiebedarfs der Leuchtmittel (18), mit einer Vorwärtssteuerung den Wert der Stellgrösse (t_{ON}) sprunghaft zu verringern.

7. Betriebsschaltung nach einem der Ansprüche 1 bis 5,
**dadurch gekennzeichnet,**
**dass** die Betriebsschaltung dazu ausgelegt ist,
um bei einem Vorliegen einer schnellen bzw. sprunghaften Erhöhung des Energiebedarfs der Leuchtmittel (18), die Zeitkonstante der Regelschleife der Ausgangsspannung (U_{BUS}) zu verringern, und
um bei einem Vorliegen einer schnellen bzw. sprunghaften Verringerung des Energiebedarfs der Leuchtmittel (18), die Zeitkonstante der Regelschleife der Ausgangsspannung (U_{BUS}) zu verringern.

8. Betriebsschaltung einem der Ansprüche 1 bis 7,
**dadurch gekennzeichnet,**
**dass** die Steuereinheit (16) ausgebildet ist, um bei Vorliegen des vordefinierten Events, den Wert der Stellgrösse (t_{ON}) bzw. die Zeitkonstante der Regelschleife durch eine Berechnungsvorschrift oder ein Auslesen einer Tabelle zu ermitteln.

9. System mit einer Betriebsschaltung nach einem der Ansprüche 1 bis 8 und einem Leuchtmittel, insbesondere einem LED-Modul (18).

10. Verfahren zum Betrieb von Leuchtmitteln (18), insbesondere LED-Strecken,
wobei mittels aktiv getakteter Leistungsfaktor-Korrektur, eine geregelte Ausgangsspannung (U_{BUS}) erzeugt wird, mittels der unmittelbar oder mittelbar die Leuchtmittel (18) versorgt werden,
wobei die Regelung als Stellgrösse (t_{ON}) die Taktung der Leistungsfaktor-Korrektur (11) nutzt, **dadurch gekennzeichnet dass** bei Vorliegen einer schnellen bzw. sprunghaften Veränderung des Energiebedarfs der Leuchtmittel (18) die Zeitkonstante der Regelschleife der Ausgangsspannung (U_{BUS}) verringert wird.

11. Verfahren nach Anspruch 10,
**dadurch gekennzeichnet,**
bei der schnellen bzw. sprunghaften Veränderung des Energiebedarfs der Leuchtmittel (18) der Wert der Stellgrösse (t_{ON}) mit einer Vorwärtssteuerung sprunghaft verändert wird.

12. Verfahren nach Anspruch 10 oder 11,
**dadurch gekennzeichnet,**
**dass** eine Differenz einer gegenwärtig von dem Leuchtmittel (18) aufgenommenen Leistung und einer nach einer Leistungsänderung von dem Leuchtmittel (18) aufgenommenen Leistung gebildet wird, und
**dass** in Abhängigkeit von der Differenz das vordefinierte Event detektiert wird.

13. Verfahren nach Anspruch 12,
**dadurch gekennzeichnet,**
**dass** die Differenz mit zumindest einem Schwellwert verglichen wird, und
**dass** in Abhängigkeit von dem Vergleich das vordefinierte Event detektiert wird.

14. Verfahren nach Anspruch 11 und 13,
**dadurch gekennzeichnet,**
**dass** die Differenz mit zwei Schwellenwerten vergleichen wird, und
die Zeitkonstante der Regelschleife der Ausgangsspannung (U_{BUS}) verringert wird, wenn die Differenz zwischen den beiden Schwellenwerten liegt, und den Wert der Stellgrösse (t_{ON}) mit einer Vorwärtssteuerung sprunghaft verändert wird, wenn die Differenz oberhalb des oberen Schwellenwerts der beiden Schwellenwerte liegt.

15. Verfahren nach einem der Ansprüche 10 bis 14,
**dadurch gekennzeichnet,**
**dass** bei einem Vorliegen einer schnellen bzw. sprunghaften Erhöhung des Energiebedarfs der Leuchtmittel (18), mit einer Vorwärtssteuerung der Wert der Stellgrösse (t_{ON}) sprunghaft erhöht wird, und
**dass** bei einem Vorliegen einer schnellen bzw. sprunghaften Verringerung des Energiebedarfs der Leuchtmittel (18), mit einer Vorwärtssteuerung der Wert der Stellgrösse (t_{ON}) sprunghaft verringert wird.

16. Verfahren nach einem der Ansprüche 10 bis 14,
**dadurch gekennzeichnet,**
**dass** bei einem Vorliegen einer schnellen bzw. sprunghaften Erhöhung des Energiebedarfs der Leuchtmittel (18), die Zeitkonstante der Regelschleife der Ausgangsspannung (U_{BUS}) verringert wird, und dass bei einem Vorliegen einer schnellen bzw. sprunghaften Verringerung des Energiebedarfs der Leuchtmittel (18), die Zeitkonstante der Regelschleife der Ausgangsspannung (U_{BUS}) verringert wird.

17. Verfahren einem der Ansprüche 10 bis 16,
**dadurch gekennzeichnet,**
**dass** bei einem Vorliegen einer schnellen bzw. sprunghaften Verringerung des Energiebedarfs der Leuchtmittel (18) der Wert der Stellgrösse (t_{ON}) bzw. die Zeitkonstante der Regelschleife durch eine Berechnungsvorschrift oder ein Auslesen einer Tabelle ermittelt werden.

18. Integrierte Schaltung, insbesondere ASIC und/oder Mikrokontroller, die analog oder digital ausgelegt ist und weiterhin dazu ausgelegt ist, ein Verfahren nach einem der Ansprüche 10 bis 17 zu unterstützen.

## Claims

1. Operating circuit for a lighting means (18) in the form of an LED track, with an actively clocked power factor correction circuit (11) which generates an output voltage (U_{BUS}) regulated by a control loop, wherein the lighting means (18) is directly or indirectly supplied via at least one further converter stage (17), wherein the control loop comprises a control unit (16) which controls the timing of a switch of the power factor correction circuit (11) as a manipulated variable (t_{ON}),
**characterized in that**
the operating circuit is designed to reduce the time constant of the control voltage of the output voltage (U_{BUS}) in the presence of a rapid or sudden change in the energy requirement of the lighting means (18).

2. Operating circuit according to claim 1,
**characterized in that**
the operating circuit is designed to rapidly change the value of the manipulated variable (t_{ON}) with a forward control in the presence of a rapid or sudden change in the energy requirement of the lighting means (18).

3. Operating circuit according to claim 1 or 2,
**characterized in that**
the control unit (16) comprises a subtractor, wherein the subtractor determines a difference between the power currently consumed by the lighting means (18) and the power consumed by the lighting means (18) after a power change, and wherein the control unit (16) detects the predefined event as a function of the difference.

4. Operating circuit according to claim 3,
**characterized in that**
the control unit (16) comprises a comparator, wherein the comparator compares the difference with at least one threshold value, and wherein the control unit (16) detects the predefined event) as a function of the comparison.

5. Operating circuit according to claim 2 and 4,
**characterized in that**
the comparator is arranged to compare the difference with two threshold values, and the operating circuit is designed to reduce the time constant of the control loop of the output voltage (U_{BUS}) when the difference lies between the two threshold values, and to rapidly change the value of the manipulated variable (t_{ON}) with a forward control when the difference lies above the upper threshold value of the two threshold values.

6. Operating circuit according to one of the claims 1 to 5,
**characterized in that**
the operating circuit is designed to rapidly increase the value of the manipulated variable (t_{ON}) with a forward control in the presence of a rapid or sudden increase in the energy requirement of the lighting means(18), and to rapidly decrease the value of the manipulated variable (t_{ON}) with a forward control in a presence of a rapid or sudden decrease in the energy requirement of the lighting means (18).

7. Operating circuit according to one of the claims 1 to 5,
**characterized in that**
the operating circuit is designed to reduce the time constant of the control loop of the output voltage (U_{BUS}) in the presence of a rapid or sudden increase in the energy requirement of the lighting means (18) and to reduce the time constant of the control loop of the output voltage (U_{BUS}), in the presence of a rapid or sudden decrease in the energy requirement of the lighting means (18).

8. Operating circuit according to one of the claims 1 to 7,
**characterized in that**
the control unit (16) is designed to determine the value of the manipulated variable (t_{ON}) or the time constant of the control loop by a calculation rule or a readout of a table in the presence of the predefined event.

9. System having an operating circuit according to one of the claims 1 to 8 and a lighting means (18), in particular an LED module.

10. Method for operating lighting means (18), in particular LED tracks, wherein a regulated output voltage (U_{BUS}) is generated by means of active clocked power factor correction, by means of which the lighting means (18) are directly or indirectly supplied, wherein the regulation uses the timing of the power factor correction (11) as the manipulated variable (t_{ON}),
**characterized in that**
the time constant of the control loop of the output voltage (U_{BUS}) is reduced in the presence of a rapid or sudden change in the energy requirement of the lighting means (18).

11. Method according to claim 10,
**characterized in that**
the value of the manipulated variable (t_{ON}) is changed rapidly with forward control in the presence of rapid or sudden change in the energy requirement of the lighting means (18).

12. Method according to claim 10 or 11,
**characterized in that**
a difference between the power currently consumed by the lighting means (18) and the power consumed by the lighting means (18) after a power change is determined, while the control unit (16) detects the predefined event as a function of the difference.

13. Method according to claim 12,
**characterized in that**
the difference is compared with at least one threshold value, and that the predefined event is detected as a function of the comparison.

14. Method according to claim 11 and 13,
**characterized in that**
the difference is compared with two threshold values, and the time constant of the control voltage of the output voltage (U_{BUS}) is reduced when there is a difference between the two thresholds, wherein the value of the manipulated variable (t_{ON}) is changed rapidly with forward control when the difference is above the upper threshold value of the two threshold values.

15. Method according to any one of the claims 10 to 14,
**characterized in that**
the value of the manipulated variable (t_{ON}) is increased suddenly with forward control in the presence of a rapid or sudden increase in the energy requirement of the lighting means (18), while the value of the manipulated variable (t_{ON}) is suddenly reduced with forward control If there is a rapid or sudden decrease in the energy requirement of the lighting means (18).

16. Method according to any one of the claims 10 to 14,
**characterized in that**
the time constant of the control loop of the output voltage (U_{BUS}) is reduced in the presence of a rapid or sudden increase in the energy requirement of the lighting means (18), while the time constant of the control loop of the output voltage (U_{BUS}) is reduced in the presence of a rapid or sudden reduction of the energy requirement of the lighting means (18).

17. Method according to any one of the claims 10 to 16,
**characterized in that**
in the presence of a rapid or sudden decrease in the energy requirement of the lighting means (18), the value of the manipulated variable (t_{ON}) or the time constant of the control loop is determined by a calculation rule or a readout of a table.

18. Integrated circuit, in particular ASIC and/or microcontroller, which is designed analog or digital and is further designed to support a method according to one of the claims 10 to 17.

## Revendications

1. Circuit d'exploitation pour moyens d'éclairage (18) sous la forme d'une chaîne de LED,
avec un circuit de correction de facteur de puissance (11) cadencé activement, qui génère une tension de sortie (U_{BUS}), régulée avec une boucle de régulation, au moyen de laquelle sont alimentés, directement ou indirectement, par l'intermédiaire d'un autre étage de convertisseur (17), les moyens d'éclairage (18), la boucle de régulation comprenant une unité de commande (16), qui contrôle, en tant que grandeur de réglage (t_{ON}), le cadencement d'un commutateur du circuit de correction de facteur de puissance (11),
**caractérisé en ce que**
le circuit d'exploitation est conçu pour réduire, lors de l'existence d'une modification rapide ou brusque des besoins en énergie des moyens d'éclairage (18), la constante de temps de la boucle de régulation de la tension de sortie (U_{BUS}).

2. Circuit d'exploitation selon la revendication 1,
**caractérisé en ce que**
le circuit d'exploitation est conçu pour modifier brusquement, lors de la modification rapide ou brusque des besoins en énergie des moyens d'éclairage (18), la valeur de la grandeur de réglage (t_{ON}) avec une commande vers l'avant.

3. Circuit d'exploitation selon la revendication 1 ou 2,
**caractérisé en ce que**
l'unité de commande (16) contient un soustracteur,
le soustracteur génère une différence entre une puissance absorbée actuellement par le moyen d'éclairage (18) et une puissance absorbée après une modification de la puissance par le moyen d'éclairage (18), et
l'unité de commande (16) détecte l'événement prédéfini en fonction de la différence.

4. Circuit d'exploitation selon la revendication 3,
**caractérisé en ce que**
l'unité de commande (16) contient un comparateur,
le comparateur compare la différence avec au moins une valeur seuil et
l'unité de commande (16) détecte l'événement prédéfini en fonction de la comparaison.

5. Circuit d'exploitation selon la revendication 2 et 4,
**caractérisé en ce que**
le comparateur est conçu pour comparer la différence avec deux valeurs seuils et
le circuit d'exploitation est conçu pour réduire la constante de temps de la boucle de régulation de la tension de sortie (U_{BUS}) lorsque la différence se trouve entre les deux valeurs seuils, et pour modifier brusquement la valeur de la grandeur de réglage (t_{ON}) avec une commande vers l'avant lorsque la différence se trouve au-dessus de la valeur seuil supérieure des deux valeurs seuils.

6. Circuit d'exploitation selon l'une des revendications 1 à 5,
**caractérisé en ce que**
le circuit d'exploitation est conçu
pour augmenter brusquement, lors de l'existence d'une augmentation rapide ou brusque des besoins en énergie des moyens d'éclairage (18), avec une commande vers l'avant, la valeur de la grandeur de réglage (t_{ON}) et
pour réduire brusquement, lors de l'existence d'une réduction rapide ou brusque des besoins en énergie des moyens d'éclairage (18), avec une commande vers l'avant, la valeur de la grandeur de réglage (t_{ON}).

7. Circuit d'exploitation selon l'une des revendications 1 à 5,
**caractérisé en ce que**
le circuit d'exploitation est conçu
pour réduire, lors de l'existence d'une augmentation rapide ou brusque des besoins en énergie des moyens d'éclairage (18), la constante de temps de la boucle de régulation de la tension de sortie (U_{BUS}) et
pour réduire, lors de l'existence d'une réduction rapide ou brusque des besoins en énergie des moyens d'éclairage (18), la constante de temps de la boucle de régulation de la tension de sortie (U_{BUS}).

8. Circuit d'exploitation selon l'une des revendications 1 à 7,
**caractérisé en ce que**
l'unité de commande (16) est conçue pour déterminer, lors de l'existence de l'événement prédéfini, la valeur de la grandeur de réglage (t_{ON}) ou la constante de temps de la boucle de régulation à l'aide d'une directive de calcul ou de la lecture d'une table.

9. Système avec un circuit d'exploitation selon l'une des revendications 1 à 8 et un moyen d'éclairage, plus particulièrement un module à LED (18).

10. Procédé d'exploitation de moyens d'éclairage (18),
plus particulièrement de chaînes de LED,
moyennant quoi, au moyen d'une correction de facteur de puissance cadencée activement, une tension de sortie (U_{BUS}) régulée est générée, au moyen de laquelle les moyens d'éclairage (18) sont alimentés directement ou indirectement,
la régulation en tant que grandeur de réglage (t_{ON}) permettant le cadencement de la correction du facteur de puissance (11),
**caractérisé en ce que**, lors de l'existence d'une modification rapide ou brusque des besoins en énergie des moyens d'éclairage (18), la constante de temps de la boucle de régulation de la tension de sortie (U_{BUS}) est réduite.

11. Procédé selon la revendication 10,
**caractérisé en ce que**
lors de la modification rapide ou brusque des besoins en énergie des moyens d'éclairage (18), la valeur de la grandeur de réglage (t_{ON}) est modifiée brusquement avec une commande vers l'avant.

12. Procédé selon la revendication 10 ou 11,
**caractérisé en ce que**
une différence entre une puissance absorbée actuellement par le moyen d'éclairage (18) et une puissance absorbée après une modification de la puissance par le moyen d'éclairage (18) est générée, et
l'événement prédéfini est détecté en fonction de la différence.

13. Procédé selon la revendication 12,
**caractérisé en ce que**
la différence est comparée avec au moins une valeur seuil et
l'événement prédéfini est détecté en fonction de la comparaison.

14. Procédé selon la revendication 11 et 13,
**caractérisé en ce que**
la différence est comparée avec deux valeurs seuils et
la constante de temps de la boucle de régulation de la tension de sortie (U_{BUS}) est réduite lorsque la différence se trouve entre les deux valeurs seuils, et la valeur de la grandeur de réglage (t_{ON}) est modifiée brusquement avec une commande vers l'avant lorsque la différence se trouve au-dessus de la valeur seuil supérieure des deux valeurs seuils.

15. Procédé selon l'une des revendications 10 à 14,
**caractérisé en ce que**
lors de l'existence d'une augmentation rapide ou brusque des besoins en énergie des moyens d'éclairage (18), la valeur de la grandeur de réglage (t_{ON}) est augmentée brusquement avec une commande vers l'avant et
lors de l'existence d'une réduction rapide ou brusque des besoins en énergie des moyens d'éclairage (18), la valeur de la grandeur de réglage (t_{ON}) est réduite brusquement avec une commande vers l'avant.

16. Procédé selon l'une des revendications 10 à 14,
**caractérisé en ce que**
lors de l'existence d'une augmentation rapide ou brusque des besoins en énergie des moyens d'éclairage (18), la constante de temps de la boucle de régulation de la tension de sortie (U_{BUS}) est réduite et, lors de l'existence d'une réduction rapide ou brusque des besoins en énergie des moyens d'éclairage (18), la constante de temps de la boucle de régulation de la tension de sortie (U_{BUS}) est réduite.

17. Procédé selon l'une des revendications 10 à 16,
**caractérisé en ce que**
lors de l'existence d'une réduction rapide ou brusque des besoins en énergie des moyens d'éclairage (18), la valeur de la grandeur de réglage (t_{ON}) ou la constante de temps de la boucle de régulation est déterminée à l'aide d'une directive de calcul ou de la lecture d'une table.

18. Circuit intégré, plus particulièrement ASIC et/ou microcontrôleur qui est conçu de manière analogique ou digitale et qui est en outre conçu pour exécuter un procédé selon l'une des revendications 10 à 17.
